# EUROPÄISCHE PATENTANMELDUNG

(11) **EP 3 865 381 A1**
(43) Date of publication of application: **18.08.2021**
(21) Application number: 19896495.9
(22) Date of filing: 07.08.2019
(51) Int. Cl.: B62D 33/02

(54) **UNMANNED VEHICLE CHASSIS AND UNMANNED VEHICLE**

(30) Priority: 11.12.2018 CN 201811510502
(71) Applicant: Beijing Jingdong Qianshi Technology Co., Ltd., Beijing 100176 (CN)
(72) Inventor: ZHANG, Zhanhui, Beijing 100086 (CN); WANG, Ming, Beijing 100086 (CN); WANG, Shuchao, Beijing 100086 (CN); SHAO, Lian, Beijing 100086 (CN); YAN, Yingchun, Beijing 100086 (CN)
(74) Representative: Prüfer & Partner mbB Patentanwälte · Rechtsanwälte
(86) International application number: PCT/CN2019/099558
(87) International publication number: WO 2020/119149

(57) **Abstract**

The disclosure relates to an unmanned vehicle chassis (1). The unmanned vehicle chassis (1) comprises at least two chassis units (11), the at least two chassis units (11) being spliced to form the unmanned vehicle chassis (1). The unmanned vehicle chassis (1) is formed by splicing at least two chassis units (11), so unmanned vehicle chassis (1) of different sizes can be formed by splicing different numbers of chassis units (11) to carry cargo boxes of different sizes, without the need to specially design and develop different chassis for cargo boxes of different sizes, thereby reducing the research and development cost. The disclosure also relates to an unmanned vehicle.

## Description

### CROSS-REFERENCE TO RELATED APPLICATIONS

This application is based on and claims priority to CN application No. 201811510502.3, filed on December 11, 2018, the disclosure of which is hereby incorporated by reference in its entirety.

### FIELD OF THE DISCLOSURE

The present disclosure relates to the field of logistics and delivery technology, in particular to an unmanned vehicle chassis and an unmanned vehicle.

### BACKGROUND OF THE DISCLOSURE

To adapt to different cargo quantities and cargo volumes, an unmanned delivery vehicle usually needs to be equipped with cargo boxes of different sizes. The cargo boxes need to be carried by chassis, so chassis of different sizes need to be designed and developed for the cargo boxes of different sizes. The cost of developing and manufacturing chassis of different sizes is relatively high.

### SUMMARY OF THE DISCLOSURE

An object of the present disclosure is providing an unmanned vehicle chassis and an unmanned vehicle to meet the requirement of carrying cargo boxes of different sizes.

A first aspect of the present disclosure provides an unmanned vehicle chassis, which includes at least two chassis units, the at least two chassis units being spliced to form the unmanned vehicle chassis.

In some embodiments, the unmanned vehicle chassis includes at least two different chassis units.

In some embodiments, the at least two chassis units are spliced in a horizontal direction.

In some embodiments, the chassis unit includes a chassis unit body and wheels arranged on the underside of the chassis unit body.

In some embodiments, the chassis unit body has connecting surfaces configured to connect with adjacent other chassis unit bodies; and the chassis unit further includes connecting portions provided on the connecting surfaces of the chassis unit body, and the connecting portions are configured to connect adjacent two chassis unit bodies.

In some embodiments, the connecting portions include magnetic bodies.

In some embodiments, the connecting surfaces include protrusions located on two ends thereof respectively, and magnetic bodies are attached to the protrusions.

In some embodiments, the unmanned vehicle chassis includes a controller, which is coupled with the at least two chassis units to control the at least two chassis units to move synchronously.

In some embodiments, the chassis unit includes a communication module and a control module, the communication module being configured to receive a control signal from the controller and transmit the signal to the control module.

In some embodiments, the chassis unit includes wheels, a driving motor configured to drive the wheels to travel, and a steering motor configured to control the steering of the wheels, and the control module is configured to control operation of the driving motor and the steering motor.

A second aspect of the present disclosure provides an unmanned vehicle, which includes the unmanned vehicle chassis of any paragraph of the first aspect of the present disclosure.

In some embodiments, the unmanned vehicle includes a sensor assembly and a controller, the sensor assembly being configured to monitor the surrounding environment, the controller being configured to receive monitoring information sent by the sensor assembly and control movement of the unmanned vehicle chassis according to the monitoring information.

In some embodiments, the unmanned vehicle further includes a cargo box provided on the unmanned vehicle chassis, and the unmanned vehicle chassis formed by splicing at least two chassis units is matched in size to the cargo box.

Based on the technical solution provided in the present disclosure, the unmanned vehicle chassis includes at least two chassis units, the at least two chassis units being spliced to form the unmanned vehicle chassis. The unmanned vehicle chassis of the present disclosure is formed by splicing at least two chassis units, so unmanned vehicle chassis of different sizes can be formed by splicing different numbers of chassis units to carry cargo boxes of different sizes, without the need to specially design and develop different chassis for cargo boxes of different sizes, thereby reducing the research and development cost.

Other features and advantages of the present disclosure will become apparent from the following detailed description of exemplary embodiments of the present disclosure with reference to the accompanying drawings.

### BRIEF DESCRIPTION OF THE ACCOMPANYING DRAWINGS

Drawings described here are used to provide a further understanding of the present disclosure and form a part of the present application. Illustrative embodiments of the present disclosure and description thereof are used for explaining the present disclosure, but do not improperly limit the present disclosure. In the drawings:
Fig. 1 is a structure diagram of an unmanned vehicle chassis of an embodiment of the present disclosure; and
Fig. 2 is a structure diagram of a chassis unit in Fig. 1.

### DETAILED DESCRIPTION OF THE PREFERRED EMBODIMENTS

Technical solutions in the embodiments will be described below clearly and completely in conjunction with the accompanying drawings in the embodiments of the present disclosure. Obviously, the described embodiments are only a part of the embodiments of the present application, and not all the embodiments. The following description of at least one exemplary embodiment is actually only illustrative, and in no way serves as any limitation to the present disclosure and its application or use. Based on the embodiments in the present disclosure, all of other embodiments obtained by a person of ordinary skill in the art without creative work should fall into the protection scope of the present disclosure.

Unless specifically stated otherwise, the relative arrangement of components and steps, numerical expressions and numerical values set forth in these embodiments do not limit the scope of the present disclosure. Furthermore, it should be understood that, for ease of description, the sizes of various parts shown in the drawings are not drawn in accordance with actual proportional relationships. Technologies, methods, and devices known to those of ordinary skill in the related art may be not discussed in detail, but where appropriate, the technologies, methods, and device should be regarded as part of the specification as granted. In all examples shown and discussed here, any specific value should be interpreted as merely exemplary, rather than as a limitation. Therefore, other examples of an exemplary embodiment may have different values. It should be noted that similar reference numerals and letters denote similar items in the following drawings, so once a certain item is defined in one drawing, it does not need to be further discussed in subsequent drawings.

For ease of description, spatially relative terms such as "above...", "over...", "on an upper surface of ..." and "upper" may be used here to describe spatial positional relationship between one device or feature and other devices or features as shown in the figures. It should be understood that a spatially relative term is intended to encompass different orientations in use or operation other than the orientation of a device described in a figure. For example, if the device in the figure is inverted, then the device described as "above other devices or structures" or "over other devices or structures" will be positioned "below other devices or structures" or "under other devices or structures". Thus, the exemplary term "above..." may include both orientations of "above..." and "below...". The device may also be positioned in other different ways (rotated by 90 degrees or in other orientations), and the relative spatial description used here is explained accordingly.

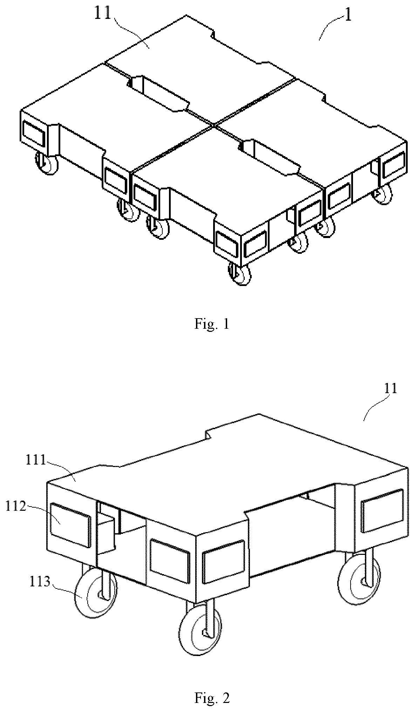

As shown in Figs. 1 and 2, an unmanned vehicle chassis 1 of an embodiment of the present disclosure includes at least two chassis units 11. The at least two chassis units 11 are spliced to form the unmanned vehicle chassis 1. The unmanned vehicle chassis of the embodiment of the present disclosure is formed by splicing at least two chassis units, so unmanned vehicle chassis of different sizes can be formed by splicing different numbers of chassis units to carry cargo boxes of different sizes, without the need to specially design and develop different chassis for cargo boxes of different sizes, thereby reducing the research and development cost.

Specifically, in this embodiment, as shown in Fig. 1, the unmanned vehicle chassis 1 includes at least two identical chassis units 11. The chassis units 11 spliced to form the unmanned vehicle chassis 1 have same structures and sizes. Therefore, only one type of chassis unit needs to be developed during research and development, which greatly reduces the research and development cost. In the actual manufacturing process, it needs to design, according to the sizes of different cargo boxes, a chassis unit of a smallest size that can be spliced, to meet the requirement of carrying cargo boxes of different sizes.

In an embodiment not shown in the drawings, the unmanned vehicle chassis may also include at least two different chassis units. For example, three different types of chassis units may be provided, and then chassis of different sizes may also be formed by selecting different combinations from the three different types of chassis units and splicing the same.

Preferably, as shown in Fig. 1, the at least two chassis units 11 of this embodiment are spliced in a horizontal direction.

As shown in Fig. 2, the chassis unit 11 includes a chassis unit body 111 and wheels 113 provided at the underside of the chassis unit body 111. In this embodiment, as the underside of the chassis unit body 111 of each chassis unit 11 is provided with wheels 113, each chassis unit 11 can walk independently, thereby improving the adaptability of unmanned vehicle chassis formed by splicing a plurality of chassis units 11.

To ensure that chassis unit bodies 111 can be connected more tightly to form a structurally stable chassis, the chassis unit body 111 of this embodiment has connecting surfaces for connection with adjacent other chassis unit bodies. The chassis unit 11 further includes connecting portions provided on the connecting surfaces of the chassis unit body 111, and the connecting portions are configured to connect adjacent two chassis unit bodies 111.

Specifically, as shown in Fig. 2, the connecting portions of this embodiment include magnetic bodies 112.

Moreover, the connecting surfaces of the chassis unit body 111 of this embodiment include protrusions located at two ends respectively. The magnetic bodies 112 are attached to the protrusions. As shown in Fig. 2, a right side surface (in a left-right direction shown in the figure) of the chassis unit body 111 is provided with protrusions on both front and rear ends, and magnetic bodies 112 are attached to the protrusions. The design of the two connecting parts is beneficial to ensuring tight connection between the chassis unit body 111 and adjacent other chassis unit bodies 111, and avoiding detachment of the vehicle chassis during operation. This configuration is also beneficial to avoiding the problem of non-tight connection or misalignment of the magnetic bodies caused by failure to fit adjacent two connecting surfaces to each other when a process of manufacturing the chassis unit body 111 is not up to standard.

The magnetic body 12 of this embodiment may be a strong magnet or an electromagnet. In the case where the magnetic body is an electromagnet, for example, electromagnets may be provided on each side of the chassis unit body 111 and only the electromagnets provided on the connecting surfaces are controlled to be electrified and function, to avoid interference with the normal operation of the chassis caused by electromagnetic interaction with other irrelevant mechanisms on the road due to functioning of the electromagnets provided on non-connecting surfaces. For example, the electromagnets on lateral sides of the chassis unit bodies 111 in Fig. 1 that are located on outer sides of the unmanned vehicle chassis 1 and not connected to other chassis unit bodies may be configured not to be electrified.

The chassis unit body 111 of this embodiment is a square cavity structure. The square cavity structure has an opening to facilitate a working person placing and inspecting components placed in the square cavity structure.

Four wheels 113 are provided at the underside of the chassis unit body 111 of this embodiment.

Each chassis unit 11 of this embodiment can walk independently, and thus to enable the chassis units 11 to move synchronously, the unmanned vehicle chassis 1 of this embodiment includes a controller, which is coupled with the at least two chassis units 11 to control the at least two chassis units 11 to move synchronously.

The chassis unit 11 of this embodiment includes a communication module and a control module. The communication module receives a control signal from the controller and transmits the signal to the control module. Moreover, the communication module may also transmit an operating status of the chassis unit 11 to the controller. The communication module of each chassis unit may exchange information with the controller in a wireless transmission manner.

The chassis unit 11 includes wheels 113, a driving motor configured to drive the wheels 113 to travel, and a steering motor configured to control the steering of the wheels 113, and the control module is configured to control operation of the driving motor and the steering motor. Providing the driving motor and the steering motor can implement the movement control of the chassis unit 11 in any direction by the controller.

Preferably, the chassis unit of this embodiment further includes a battery power supply system to be responsible for power supply of the chassis unit itself.

An embodiment of the present disclosure further provides an unmanned vehicle. The unmanned vehicle includes the unmanned vehicle chassis described in the above embodiment.

Preferably, the unmanned vehicle includes a sensor assembly configured to monitor the surrounding environment and a controller, the controller being configured to receive monitoring information sent by the sensor assembly and control movement of the unmanned vehicle chassis according to the monitoring information.

The unmanned vehicle further includes a cargo box provided on the unmanned vehicle chassis, and the unmanned vehicle chassis formed by splicing at least two chassis units is adapted to the cargo box. The adaptation of the unmanned vehicle chassis to the cargo box here may be size adaptation or shape adaptation.

The unmanned vehicle of this embodiment is an unmanned delivery vehicle.

Finally, it should be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof; and such modifications and equivalent substitutions should be encompassed within the scope of the technical solutions sought for protection in the present disclosure so long as they do not depart from the spirit of the technical solutions of the present disclosure.

## Claims

1. An unmanned vehicle chassis, comprising at least two chassis units (11), the at least two chassis units (11) being spliced to form the unmanned vehicle chassis.

2. The unmanned vehicle chassis according to claim 1, wherein the unmanned vehicle chassis comprises at least two identical chassis units (11).

3. The unmanned vehicle chassis according to claim 1, wherein the at least two chassis units (11) are spliced in a horizontal direction.

4. The unmanned vehicle chassis according to claim 1, wherein the chassis unit (11) comprises a chassis unit body (111) and wheels (113) arranged on the underside of the chassis unit body (111).

5. The unmanned vehicle chassis according to claim 4, wherein the chassis unit body (111) has connecting surfaces configured to connect with adjacent other chassis unit bodies; and the chassis unit (11) further comprises connecting portions provided on the connecting surfaces of the chassis unit body (111), and the connecting portions are configured to connect adjacent two chassis unit bodies (111).

6. The unmanned vehicle chassis according to claim 5, wherein the connecting portions comprise magnetic bodies (112).

7. The unmanned vehicle chassis according to claim 6, wherein the connecting surfaces comprise protrusions located on two ends thereof respectively, and magnetic bodies (112) are attached to the protrusions.

8. The unmanned vehicle chassis according to any one of claims 1 to 7, wherein the unmanned vehicle chassis comprises a controller, which is coupled with the at least two chassis units (11) to control the at least two chassis units (11) to move synchronously.

9. The unmanned vehicle chassis according to claim 8, wherein the chassis unit comprises a communication module and a control module, the communication module being configured to receive a control signal from the controller and transmit the signal to the control module.

10. The unmanned vehicle chassis according to claim 8, wherein the chassis unit (11) comprises wheels (113), a driving motor configured to drive the wheels (113) to travel, and a steering motor configured to control the steering of the wheels (113), and the control module is configured to control the operation of the driving motor and the steering motor.

11. An unmanned vehicle, comprising the unmanned vehicle chassis of any one of claims 1 to 10.

12. The unmanned vehicle according to claim 11, wherein the unmanned vehicle comprising a sensor assembly and a controller, the sensor assembly being configured to monitor the surrounding environment, the controller being configured to receive monitoring information sent by the sensor assembly and control movement of the unmanned vehicle chassis according to the monitoring information.

13. The unmanned vehicle according to claim 11, further comprising a cargo box provided on the unmanned vehicle chassis, and the unmanned vehicle chassis formed by splicing at least two chassis units is matched in size to the cargo box.
